# EUROPÄISCHE PATENTSCHRIFT

(11) **EP 3 352 702 B1**
(45) Veröffentlichungstag und Bekanntmachung des Hinweises auf die Patenterteilung: **01.01.2020**
(21) Anmeldenummer: 16760023.8
(22) Anmeldetag: 26.08.2016
(51) Int. Cl.: A61C 5/77, A61C 13/087, A61C 13/09

(54) **VERFAHREN ZUR HERSTELLUNG ZAHNMEDIZINISCHER RESTAURATIONEN MIT EINEM DENTALPULVER**
METHOD FOR PRODUCING DENTAL RESTORATIONS USING A DENTAL POWDER
PROCÉDÉ DE RÉALISATION DE RESTAURATIONS DENTAIRES À L'AIDE D'UNE POUDRE DENTAIRE

(30) Priorität: 21.09.2015 DE 102015115889
(43) Veröffentlichungstag der Anmeldung: 01.08.2018
(73) Patentinhaber: BREDENT GMBH & CO. KG, 89250 Senden (DE)
(72) Erfinder: MEYER, Joachim, 89081 Ulm (DE); GLÜCK, Olaf, 89284 Pfaffenhofen (DE)
(74) Vertreter: Baur & Weber Patentanwälte PartG mbB
(86) Internationale Anmeldenummer: PCT/EP2016/070154
(87) Internationale Veröffentlichungsnummer: WO 2017/050522

(56) Entgegenhaltungen:
- WO-A2-2010/087954
- WO-A2-2011/083121

## Beschreibung

Die Erfindung betrifft ein Verfahren zur Herstellung zahnmedizinischer Restaurationen mit einem Dentalpulver.

Aus dem allgemeinen Stand der Technik sind Beschichtungen von Gläsern, Glaskeramiken, Keramiken oder Metallen bzw. Metalloxyden mit organischen Werkstoffen bekannt. Diese Beschichtungen werden als Dick- oder Dünnschichten bezeichnet. Dünnschichten weisen dabei Schichtdicken im Bereich von Nanometer bis Mikrometer auf. Der Stoffmengenanteil dieser organischen Beschichtungskomponenten im Vergleich zum Substratmaterial beträgt dabei bis etwa einige wenige Prozent des Masseanteils. In der industriellen Anwendung sind elektrostatische Pulverbeschichtungen (oder auch "Coatings" genannt) mit Dispersions/Suspersionsmedium zum Spritzen oder Tauchen auf Basis von temperaturbeständigen Hochleistungspolymeren bekannt. Derartige Beschichtungen werden üblicherweise mit Schichtstärken im Bereich von 80 bis 250 µm ausgeführt und üblicherweise monolagig verarbeitet. Derartige Beschichtungstechniken finden häufig Anwendung im Rahmen von Oberflächenfunktionalisierung, beispielsweise als Antihaftschicht, Reduktion von Reibewiderständen und im Isolationsbereich.

Bei medizinischen Anwendungen ist die Verwendung von Hochleistungspolymeren, beispielsweise PAEK-Polymere (Polyaryletherketon) in der Weiterverarbeitung von Granulaten bzw. in extrudierter Form als Halbzeuge an sich bekannt. Dabei ist zu beachten, dass Hochleistungspolymere in bekannten medizinischen Anwendungen nach der Synthese bereits eine thermische Behandlung durchlaufen haben. Aufgrund dieser Herstellungsprozesse sind dem Anpassen des Polymers mittels Füllstoffen enge Grenzen gesetzt, da ein Füllstoffanteil von mehr als 40 % zum Degradieren des Polymers und damit einem Verschlechtern der Mechanik führt, da die Füllstoffe durch die thermischen Prozesse bei der Weiterverarbeitung des Granulats bzw. des Extrudierens geschädigt oder in ihrer beabsichtigten Wirkung nachlassen.

Desweiteren sind Dentalpulver bekannt, die zur Beschichtung von Substraten verwendet werden. Dabei werden zur verbesserten Verarbeitung der Dentalpulver Anmischflüssigkeiten verwendet, um hochviskose, dickflüssige Schlicker herzustellen. Ein Beispiel für ein derartiges Dentalpulver ist beispielsweise in der WO 2006/079619 A1 gezeigt.

In der WO 2010/087954 A2 wird ein Dentalpulver zur Herstellung von Zahnersatzteilen angegeben, das zur Reduktion der Abnutzung von Zahnersatzteilen bis zu 50% aus einem unvernetzten Polymer, bis zu 50% aus einem monofunktionellen Polymer und bis zu 40% aus einem hochvernetzten Polymer, bis zu 50% aus einem vernetzten Polymer und zwischen 5% und 35% aus einem Binder bestehen kann, wobei das hochvernetzte Polymer als gemahlenes Pulver mit einem Partikeldurchmesser von rund 500 Mikrometer bereitgestellt wird und das vernetzte Polymer als diskrete Partikel mit einem Durchmesser von rund 500 Mikrometern bereitgestellt wird.

Im Bereich der Herstellung dentaler Restaurationen aus PAEK (Polyaryletherketon)-Werkstoffen sind unterschiedliche Produktionsverfahren bekannt.

Zum einen sind spanabhebende, subtraktive Verfahren bekannt. Hier wird durch Extrusion oder im Spritz / Spritzprägeverfahren von PAEK / PAEK- haltige Blends und geeigneten Füllstoffen ein Halbzeug hergestellt. Mittels eines anschließenden analogen oder digitalen Bearbeitungsprozess (CAD/CAM) wird in einem abtragenden (subtraktiven) Bearbeitungsverfahren, vorzugsweise spanabhebend oder schleifend, aus dem Halbzeug eine dentalen Restauration subtraktiv herausgearbeitet. Die Genauigkeiten bei einem Einzelstumpf betragen hier ca. +/- 30µm ist jedoch stark abhängig von der Qualität der verwendeten Frässysteme.

Der Nachteil dieses Fertigungssystems besteht in den hohen Anschaffungskosten, benötigten Zubehör, wie Scanner, CAD und CAM Software, zeitintensiven Herstellungsprozess und umfangreiches Ausbildung und Fachwissen zu Bedienung und Wartung dieses Systems. Subtraktive Bearbeitungstechniken haben den großen Nachteil eines hohen Materialbedarfs (Halbzeug) aus dem nur ein geringer Anteil genutzt werden kann und das verbleibende Material unbrauchbar wird.

Beim Selektiven Lasersinter - Verfahren (SLS), auch Schichtaufbautechnologie, handelt es sich um ein Verfahren lokalen Aufschmelzens von pulverförmigem Ausgangsmaterial durch einen CO2-Laser. Der Werkstoff wird schichtweise auf eine Teileplattform aufgebaut. Mit den vorliegenden Dateninformationen, im STL - Format des 3D-CAD-Modells, wird das Bauteil schrittweise dreidimensional in einem Pulverbett erzeugt. Die Daten steuern den Laserstrahl entlang des Bauteilquerschnittes. Schicht für Schicht erfolgt die Bearbeitung um eine Dicke von 0,1 - 0,2 mm. Bei der Absenkung der Teileplattform stellt der Pulverbehälter die Pulvermenge für eine weitere Schicht zur Verfügung. Die vom Laser zugeführte Energie wird vom Pulver absorbiert und führt zu einer lokalen Verfestigung des Materials. Die Genauigkeiten bei einem Einzelstumpf betragen hier ca. +/- 40µm.

Der Nachteil dieses Fertigungssystem besteht in den hohen Anschaffungskosten, benötigten Zubehör, wie Scanner, CAD und CAM Software, zeitintensiven Herstellungsprozess und umfangreiche Ausbildung und Fachwissen zu Bedienung und Wartung dieses Systems.

Ebenso sind additive Verfahren, die rapid prototyping oder 3D-Druck umfassen bekannt. Mit einem 3D-Drucker, eine Maschine die computergesteuert aus einem oder mehreren flüssigen oder festen Werkstoffen nach vorgegebenen Maßen und Formen (CAD) dreidimensionale Werkstücke aufbaut, können dentale Restaurationen hergestellt werden. Beim Aufbau finden physikalische oder chemische Härtungs- oder Schmelzprozesse statt. Typische Werkstoffe für das 3D-Drucken sind Kunststoffe (vorwiegend extrudierte Polymerdrähte, Kunstharze, Keramiken und Metalle).

Der Nachteil dieses Fertigungssystem besteht in den hohen Anschaffungskosten, benötigten Zubehör, wie Scanner, CAD und CAM Software, zeitintensiven Herstellungsprozess und umfangreiche Ausbildung und Fachwissen zu Bedienung und Wartung dieses Systems. Die marktüblichen Dentaldrucker erreichen derzeit nicht erforderliche Temperaturen für die Verarbeitung von Hochleistungspolymere (>380°C). Der Temperaturschock beim Das schichtweisen Drucken und Verbinden der Schichten führt zu großen Spannungen innerhalb des Gefüges. und führt zu hohen Passungenauigkeiten. Zudem werden werkstoffbedingt nur Schichtdicken von >0,5 mm möglich, die durch den Schichtversatz zudem zu Passungenauigkeiten führen.

Es ist Aufgabe der Erfindung, ein Verfahren zur Herstellung zahnmedizinischer Restaurationen mit einem Dentalpulver zu schaffen, das im Vergleich zu den bekannten Vorgehensweisen verbesserte Eigenschaften aufweist.

Diese Aufgabe wird durch ein Verfahren zur Herstellung zahnmedizinischer Restaurationen mit einem Dentalpulver gelöst, bei dem folgende Schritte ausgeführt werden:
- Bereitstellen des Dentalpulvers aus einem thermoplastisches Basispolymer in einer wässrigen oder lösemittelhaltigen Suspension;
- Benetzen eines Trägerkörpers mit der Suspension;
- Vortrocknung der Suspension, zum wenigstens teilweisen Entfernen des Flüssigkeitsanteils der Suspension; und
- Bilden eines thermoplastischen Überzugs aus dem Basispolymers auf dem Trägerkörper durch Aufschmelzen der vorgetrockneten Suspension.

Gemäß dieser Vorgehensweise wird ein thermoplastisches Basispolymer verwendet, welches auf den Trägerkörper aufgebracht wird. Dabei kann für die individuelle Formgebung der medizinischen Restauration, wie z. B. einer Krone oder einem Konstruktionselement, der Trägerkörper als feuerfester Stumpf hergestellt werden oder aus geeigneten hitzebeständigen Einbettmassen abgeleitet werden. Ebenso kann ein physikalischer Abdruck entweder direkt oder indirekt als ein Modell eines Zahnstumpfs zum Auftragen des Dentalpulvers genutzt werden. Durch die Aufbereitung des Dentalpulvers als Suspension entsteht eine Konsistenz, die es erlaubt, den Trägerkörper entweder in die Suspension einzutauchen oder mit einem geeigneten Instrument, wie z. B. einem Pinsel, die Suspension auf eine Suprastruktur, wie z. B. einer Krone, einer Brücke oder anderem feuerfesten Material, direkt aufzutragen. Demnach ist es möglich, durch das Benetzen des Trägerkörpers mit der Suspension die Form der Krone oder der Brücke ideal zu modellieren. Nach diesem Beschichtungsvorgang in Form eines Benetzens des Trägerkörpers mit der Suspension erfolgt eine erste Vortrocknung, die jedoch bei einer Temperatur ausgeführt wird, die unterhalb der Aushärttemperatur des Basispolymers liegt. Demnach kann die oftmals beobachtete Degradierung des Basispolymers reduziert werden, da zu diesem Verfahrenszeitpunkt noch keine thermische Behandlung durchgeführt wurde.

Das thermoplastische Basispolymer kann in Form von Pulver aus einer Polymersynthese oder aus thermoplastisch verarbeiteten Formen bereitgestellt werden und umfasst vorzugsweise PAEK. Das thermoplastische Basispolymer kann direkt aus der Synthese bezogen werden, so dass es keinerlei thermische Behandlungen erfahren hat. Demnach kann die oftmals beobachtete Degradierung des Basispolymers reduziert werden, da zu diesem Verfahrenszeitpunkt noch keine thermische Behandlung durchgeführt wurde. Es ist aber auch möglich, thermoplastisch verarbeitete Formen, wie z.B. Granulat, zu verwenden, die vor Beigabe zu der Flüssigkeit zu Pulver zermahlen werden. Nach der Zugabe von Wasser und/oder einem Lösungsmittel wird dann eine Polymer-Suspension oder eine kolloidale Lösung gebildet, die eine hochviskose, dickflüssige Konsistenz aufweist, so dass ein Benetzen des Trägerkörpers möglich ist. Dazu wird vorzugsweise vor dem Benetzen des Trägerkörpers ein Homogenisieren der Suspension durch Rühren, Ultraschal oder Vibration durchgeführt.

Gemäß einer weiteren Ausführungsform der Erfindung wird der Schritt des wenigstens teilweisen Entfernens des Flüssigkeitsanteils der Suspension dadurch ausgeführt, dass ein Trocknungsschritt, vorzugsweise mittels einer Wärmebehandlung und/oder unter reduziertem Umgebungsdruck, durchgeführt wird.

Diese Ausführungsform eignet sich z. B. dann, wenn der Trägerkörper nicht wasseraufnehmend ausgeführt wird, so dass durch den direkten oder indirekten Einfluss von Wärme, z. B. über eine Rotlichtlampe, einen Vorwärmofen oder einem Fön, die überschüssige Flüssigkeit verdunstet. Die Trocknung mittels Unterdruck ist ebenso möglich.

Gemäß einer weiteren Ausführungsform der Erfindung wird der Schritt des wenigstens teilweisen Entfernens des Flüssigkeitsanteils der Suspension dadurch ausgeführt, dass der Trägerkörper flüssigkeitsaufnehmend ausgeführt wird.

Demnach ist es möglich, dass der Flüssigkeitsanteil der Suspension durch den Trägerkörper aufgenommen wird, so dass eine entsprechende Reduzierung des Wassergehalts erfolgt.

Gemäß einer weiteren Ausführungsform der Erfindung erfolgt beim Schritt des Aufbereitens des Dentalpulvers ein Homogenisieren durch Rühren, Ultraschall oder Vibration.

Demnach entsteht eine homogene flüssige Suspension als Schlicker oder Sol (kolloidale Lösung) umfassend das PAEK-Basispolymer und das entsprechende flüssige Mittel, so dass die Suspension eine Konsistenz aufweist, die das Auftragen auf den Trägerkörper ermöglicht, der auch sehr feingliedrig geformt sein kann.

Gemäß einer weiteren Ausführungsform erfolgt nach dem Vortrocknen durch thermische Behandlung ein Aufschmelzen des aus der Suspension gebildeten Überzugs auf dem Trägerkörper.

Bei dieser Variante des erfindungsgemäßen Verfahrens wird nach dem Vortrocknen der aus der Suspension gebildete Überzug auf dem Trägerkörper einer thermischen Behandlung unterzogen, die typischerweise bei einer Temperatur von 350°C bis 480°C über einen Zeitraum von ein bis zwei Stunden durchgeführt wird. Während dieser thermischen Behandlung erfolgt das Aushärten des PAEK-Basispolymers, so dass nun eine Beschichtung auf dem Trägerkörper geschaffen wird, die die bekannte Eigenschaft von Hochleistungspolymeren aufweist, wobei jedoch bei dem erfindungsgemäßen Verfahren nur eine einzige thermische Behandlung durchlaufen wurde. Sofern das Dentalpulver auf einem feuerfesten Material oder einer Einbettmasse als Trägerkörper aufgetragen wurde, kann dieser vorzugsweise nach dem Abkühlen auf Raumtemperatur anschließend beispielsweise mittels Sandstrahlen entfernt werden.

In einer anderen Variante ist es vorgesehen, nach dem Aufschmelzen des thermoplastischen Materials ein erneutes Benetzen des Trägerkörpers mit der Suspension durchzuführen und nachfolgend ein Aufschmelzen des thermoplastischen Materials erfolgt. Demgemäß wird ein mehrlagiger Überzug auf dem Trägerkörper geschaffen, der aus einzelnen thermoplastischen Schichten gebildet ist. Alternativ oder zusätzlich kann auch der Schritt des Benetzens des Trägerkörpers mit der Suspension vorzugsweise nach dem Vortrocknen und vor dem Aufschmelzen wenigstens einmal wiederholt werden. Das thermoplastische Basispolymer kann nach einer oder mehrerer Benetzungen mit der Suspension zu einer homogenen Polymerschicht umgewandelt werden.

Gemäß einer weiteren Ausführungsform der Erfindung kann vor dem Benetzen des Trägerkörpers mit der Suspension ein Aufbringen eines Zusatzstoffes auf den Trägerkörper zur Funktionalisierung erfolgen. In einer anderen Variante ist es vorgesehen, den Zusatzstoff nach dem Vortrocknen auf den Überzug zur Funktionalisierung aufzubringen. Dabei kann es insbesondere vorgesehen sein, dass nach dem Aufbringen des Zusatzstoffes ein erneutes Benetzen des Überzugs mit der Suspension erfolgt.

Nach dem Aushärten erhält man wiederum ein aufgeschmolzenes PEAK-Polymergerüst, das je nach Variante monolagig oder mehrlagig ausgeführt ist. Je nach gewünschter Funktionalisierung können die Zusatzstoffe entweder an der Außenfläche des Überzugs angeordnet sein, ohne erneut vom Schlickermaterial überzogen zu werden. Ebenso kann der Trägerkörper vor dem Benetzen mit der Suspension mit dem Zusatzstoff funktionalisiert werden. Das Aufbringen dieser Zusatzstoffe ermöglicht somit eine Funktionalisierung des Übergangs entweder zwischen dem Trägerkörper nach außen oder dem Überzug nach außen sowie zwischen dem Trägerkörper und dem Überzug oder mehreren Lagen des Überzugs. Dies erlaubt eine vielfältige Möglichkeit zur chemisch/physikalischen Funktionalisierung, in dem geeignete Füllstoffe oder Fasern eingebracht werden. Hierbei ist es vorgesehen, dass der Zusatzstoff zur Bildung retentiver Strukturen, zur Steigerung der Festigkeit, zur Verminderung der bakteriellen Vermehrung, zur chemischen Ankopplung und/oder zur Bildung eines Haftvermittlers eingesetzt wird. Die Füllstoffe können beispielsweise als Titan oder Titanoxid, oder als Glasfasern, dentale Gläser, Kristalle wie z. B. Kristobalit oder andere Stoffe eingebracht werden. So können durch den Zusatz von organischen und/oder anorganischen Substanzen Festigkeiten, Farbvariationen oder Röntgenopazitäten individuell angepaßt werden. Entscheidend für die verbesserten Eigenschaften des erfindungsgemäßen Verfahrens ist hierbei, dass das PAEK-Basispolymer direkt aus der Synthese bezogen wird und keine thermische Behandlung erfahren hat. Die im erfindungsgemäßen Verfahren in das PAEK-Basispolymer eingebrachten Füllstoffe unterliegen somit nicht der teils nachteiligen Auswirkungen von weiteren thermischen Verarbeitungsschritten, so dass flexible Zusammensetzungen und Verarbeitungsformen für eine Vielzahl von Produktindikationen neue Anwendungen schaffen.

Nach dem Aufschmelzen des thermoplastischen Materials kann eine Nachbearbeitung der Polymerschicht durchgeführt werden. Bei mehrlagigen Aufbauten, d.h. bei einer Ausführungsform mit mehrfachem Benetzen mit der Suspension, können auch noch zusätzliche Bearbeitungsschritte zur Nachbearbeitung nach einer oder mehrerer Benetzungen vorgesehen werden. Insbesondere in Kombination mit dem mehrfachen Benetzen des Trägerkörpers mit der Suspension ergeben sich vielfältige Einsatzmöglichkeiten bei der Herstellung zahnmedizinischer Restaurationen.

In einem weiteren Aspekt wird ein weiterer Trägerkörper bereitgestellt, der mittels des thermoplastischen Überzugs mit dem Trägerkörper verbunden ist. Demnach wird die Suspension zwischen dem Trägerkörper und dem weiteren Trägerkörper eingebracht, so diese miteinander verbunden werden. Der nach dem Aufschmelzen entstehende thermoplastische Überzug dient nun als eine Art Klebstoff oder Lot zwischen den beiden Trägerkörpern. Dabei kann es vorteilhaft sein, dass der weitere Trägerkörper vor dem Verbinden mit dem Trägerkörper mit der Suspension benetzt wird.

Das thermoplastische Basispolymer kann somit auch für die Verbundtechnik verwendet werden, um zwei unterschiedliche oder gleiche Werkstoffe thermoplastisch miteinander zu verbinden. Dabei können unterschiedliche oder gleiche Werkstoffe (Gerüstwerkstoff / Verblendwerkstoff) miteinander verbunden werden, sofern deren Schmelzpunkt oberhalb oder gleich dem des thermoplastischen Dentalpulvers liegt. Dabei erfolgt der Auftrag des thermoplastischen Dentalpulvers bzw. der Pulversuspension vorzugsweise z.B. auf dem Gerüstkörper oder einem Verankerungselement, wobei nachfolgende durch Trocknung und Entzug des flüssigen Bestandteils eine feste Schicht entsteht. Auf diese Schicht werden anorganische Partikel vorzugsweise aus Metall oder Oxidkeramik aufgebracht. Diese Schicht aus nunmehr thermoplastischen Dentalpulver und anorganischen Partikeln wird analog des beschrieben Verfahrens zur Herstellung einer Restauration durch thermisches Aufschmelzen zu einer festen Schicht umgeformt. Das so beschichtete Gerüst kann anschließend mit einem anderen Werkstoff verblendet oder verklebt werden. Sofern wie oben aufgeführt das thermoplastische Dentalpulver zur direkten Verbindung zweier Werkstoffe analog einem Lotes verbunden werden soll, erfolgt nachfolgende Verfahrensweise. Zunächst werden beide Elemente gesäubert und die Oberflächen vorzugsweise mittels Korund gestrahlt und ein eine Halterung oder Vorrichtung positioniert, sodass ein ca. 0,1-0,5 mm breiter Spalt zwischen beiden zu verbindenden Elementen (Werkstoffen) verbleibt. Dieser wird dann mittels des thermoplastischen Dentalpulvers oder der hergestellten Suspension aufgefüllt, analog den bisher offenbarten Schritten getrocknet und anschließend thermisch erwärmt, sodass es zur Ausprägung einer festen Schicht als auch Verbund zwischen den Grenzflächen der zwischen den Schichten kommt. Auch ein Verbund gleicher Materialien aus PAEK, PAEK-haltigen Mischungen oder Polymeren ist umsetzbar. Hier können bereits vorhandene PAEK Werkstoffe, die aus einer additiven oder subtraktiven Herstellungstechnik basieren, nachträglich mit Hilfe des thermoplastischen Dentalpulvers benetzt werden, um diese mittels einer anschließenden Wärmebehandlung aufzuschmelzen und diese miteinander zu verbinden, bzw. nachträgliche Elemente aus demselben Werkstoff oder anderen Werkstoffe (z.B. Polymere, Keramiken, Metalle, Legierungen) nachträglich einzufügen und zu verbinden.

Nachfolgend werden einige Ausführungsbeispiele anhand der Zeichnungen näher erläutert. Es zeigen:
- Fig. 1: eine schematische Darstellung bei der Anwendung des erfindungsgemäßen Verfahrens gemäß einer ersten Ausführungsform,
- Fig. 2: eine schematische Darstellung bei der Anwendung des erfindungsgemäßen Verfahrens gemäß einer zweiten Ausführungsform,
- Fig. 3: eine schematische Darstellung bei der Anwendung des erfindungsgemäßen Verfahrens gemäß einer dritten Ausführungsform,
- Fig. 4: eine schematische Darstellung bei der Anwendung des erfindungsgemäßen Verfahrens gemäß einer vierten Ausführungsform,
- Fig. 5: eine schematische Darstellung bei der Anwendung des erfindungsgemäßen Verfahrens gemäß einer fünften Ausführungsform.

In den Figuren sind gleiche oder funktional gleich wirkende Bauteile mit den gleichen Bezugszeichen versehen.

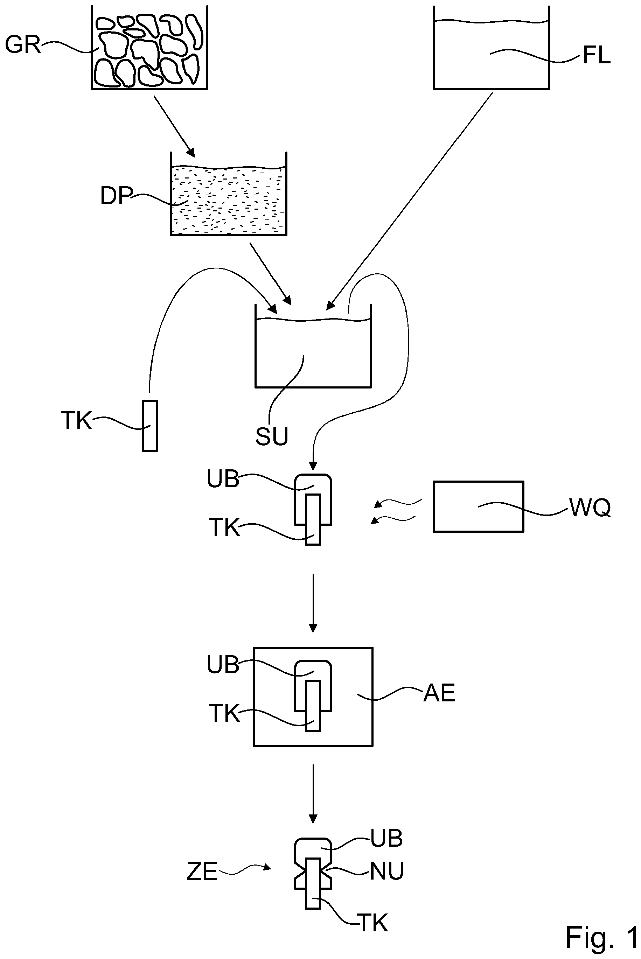

Nachfolgend wird unter Bezugnahme auf Fig. 1 eine erste Ausführungsform des erfindungsgemäßen Verfahrens vorgestellt. Das Verfahren eignet sich zur Herstellung zahnmedizinischer Restaurationen mit einem Dentalpulver. Dazu wird ein thermoplastisches Basispolymer in Pulverform direkt aus einer Polymersynthese verwendet. Alternativ kann jedoch auch eine thermoplastisch verarbeitete Form, beispielsweise ein Granulat GR wie in Fig. 1 gezeigt, als Ausgangsstoff herangezogen werden.

Das Granulat GR wird in einem ersten Schritt, der bei der Verwendung von pulverförmigen Basispolymer aus der Polymersynthese entfallen kann, zu dem Dentalpulver DP durch Zermahlen verarbeitet. Das Dentalpulver DP wird zusammen mit einer Flüssigkeit FL zu einer Suspension SU vermischt. Die Suspension SU kann dabei in Form einer beispielsweise in Wasser oder in einem Lösungsmittel gebildeten Polymer-Suspension vorliegen oder auch als koloigale Lösung bereit gestellt sein. Als Lösungsmittel kommt beispielsweise Alkohol in Frage.

Das thermoplastische Basispolymer wird aus PAEK gebildet, wobei jedoch andere thermoplastische Polymere nicht ausgeschlossen sein sollen. Bevor die Suspension SU weiter verwendet werden kann, wird üblicherweise ein Homogenisieren durchgeführt, das beispielsweise durch mechanische Einwirkung erfolgt, wie z. B. durch Rühren, durch Anwendung von Ultraschall oder durch Vibration.

Das thermoplastische Dentalpulver auf Basis von PAEK (Polyaryletherketon) kann direkt als trockenes Pulver DP mit einem flüssigen Medium FL wie Wasser an gemischt werden. Als Ausgangspunkt zur Erstellung einer benötigten Form/Trägermaterials kann eine herkömmliche zahnärztliche Abformung als Trägerkörper TK verwendet werden. Aus dieser können direkt oder indirekt (analoge oder digitale Dublierung) der abgeformte Zahnstumpf oder abgeformte Mundsituation als Ausgangsbasis einer benötigten Restauration hergestellt werden.

Vorzugsweise handelt es sich hierbei um das Ausgießen des zahnärztliche Abformung/Dublierung mittels einer formbeständigen feuerfesten Masse. Möglich erscheint auch ein direktes Scannen (in Situ) der in Mundsituation, der Abformung oder Modelles und einer direkten digitalen Umsetzung zu einem feuerfesten Stumpf/Material als Trägerkörper TK. Auf dem Trägerkörper TK kann über die Suspension SU das thermoplastische Dentalmaterial nach dem Aushärten der Masse mittels unterschiedlichen Techniken aufgebracht werden.

In einem nächsten Schritt wird ein Trägerkörper TK bereit gestellt, der durch Eintauchen in die Suspension SU mit dieser benetzt wird. Nach dem Herausnehmen des Trägerkörpers TK aus der Suspension SU entsteht nun ein Film aus der Suspension SU auf der Oberfläche des Trägerkörpers TK.

Nachdem das thermoplastische Pulver DP der Suspension SU auf den Trägerkörper TK aufgetragen wurde, kann dieser bei Bedarf vorgetrocknet werden, vorzugsweise bei Zimmertemperatur oder zusätzlich Zufuhr von Wärme (Rotlichtlampe, Ofen, Heißluft) um mögliche Restfeuchtigkeit im thermoplastischen Dentalpulver DP oder der feuerfesten Masse zu entziehen. Der Flüssigkeitsanteil der Suspension SU wird nachfolgend entfernt, um eine Vortrocknung der Suspension SU durchzuführen. Dabei kann es vorgesehen sein, dass der Trägerkörper TK flüssigkeitsaufnehmend ausgestaltet ist, so dass die Flüssigkeit FL der Suspension SU in den Trägerkörper TK eindringt. Alternativ oder zusätzlich kann eine Trocknung durchgeführt werden, die beispielsweise eine Wärmebehandlung mit Infrarotstrahlung, wie in Fig. 1 anhand der Wärmequelle WQ gezeigt ist, oder mittels einer Trocknung unter reduziertem Umgebungsdruck durchgeführt werden.

Auf der Oberfläche des Trägerkörpers TK entsteht nun ein thermoplastischer Überzug UB, bestehend aus dem Basispolymer. Nachfolgend wird der Trägerkörper TK mit dem Überzug UB in eine Aufschmelzeinrichtung AE eingeführt, in der ein Aufschmelzen des aus der Suspension gebildeten Überzugs UB erfolgt. Dazu wird der Trägerkörper TK mit dem Überzug UB auf eine Temperatur oberhalb des Schmelzpunkts des Basispolymers erhitzt, so dass der Überzug UB aufschmilzt. Diese thermische Behandlung wird typischerweise bei einer Temperatur von 350° C bis 480° C über einen Zeitraum von bei zu einer Stunde durchgeführt. Während dieser thermischen Behandlung erfolgt das Verschmelzen des PEAK-Basispolymers zu einer homogenen Polymerschicht.

Nach dem Abkühlen bei Raumtemperatur kann der Trägerkörper TK (feuerfeste Masse) entfernt werden. Es ist möglich, zwecks Funktionalisierung oder Anpassung/Optimierung der benötigten Wandstärke des so hergestellten dentalen Restauration, diesen Ansatz einer weiteren wie vormals beschriebenen Behandlung zu unterziehen, um hier eine(r) weiter(e) Schicht(en) aufzubringen, oder um mittels anderer Zusätze/Füllstoffe im thermoplastischen Dentalpulver DP, diese ja Bedarf zur Optimierung von mechanischen Werten oder zur Optimierung in der nachfolgender Weiterverarbeitung die benötigten Haftverbunde/Flächen zu verbessern.

Nach dem Abkühlen des Trägerkörpers TK und der Entnahme aus der Aufschmelzeinrichtung AE kann eine Nachbearbeitung des thermoplastischen Überzugs durchgeführt werden, die beispielsweise ein spanabhebendes Verfahren umfassen kann. Das spanabhebende Verfahren kann z. B. die Bildung einer Nut NU umfassen, wie in Fig. 1 gezeigt ist. Das so gebildete zahnmedizinische Element ZE kann nun in weiteren Verarbeitungsschritten zu einer zahnmedizinischen Restauration weiter verarbeitet werden. Dabei kann der Trägerkörper TK beispielsweise als Abutment oder Stift bereitgestellt sein. Somit kann es sich bei dem zahnmedizinischen Element ZE beispielsweise um ein vorkonfektioniertes Abutment handeln, wobei aber nicht ausgeschlossen ist, dass das Benetzen mit der Suspension SU auf den Trägerkörper TK so ausgeführt wird, dass beispielsweise der Überzug UB eine Krone oder dergleichen bilden kann.

Je nach Binderansatz der feuerfesten Masse des Trägerkörpers TK wird diese mittels Wasser oder Sandstrahlens entfernt. Die so verbleibende dentale Restauration kann nun entsprechend des gewünschten Einsatzbereiches (z.B. als verblendfähige Gerüstkonstruktion oder frikatives Element) mit den herkömmlichen Materialien und Fertigungstechniken weiterverarbeitet werden In wiederum anderen Ausführungsformen kann der Trägerkörper TK auch nicht entfernt werden sondern als metallischer oder keramischer Formkörper im zahnmedizinischen Element ZE verbleiben und somit einen Teil des zahnmedizinischen Elements ZE bilden.

In dem vorliegenden Verfahren nach Figur 1 wird nun erstmals neben den bekannten Verarbeitungstechniken innerhalb der dentalen Technologien eine neue Verarbeitungstechnik sowie eine neue Anwendung mittels polymeren Werkstoffen ermöglicht. Diese benötigt keine kostenintensiven und komplexen Verarbeitungssysteme, wie z.B. Fräsmaschinen, Scanner, Software mit den erforderlichen Wartung -und Schulungsaufwand. Weiter hat das Herstellungsverfahren maßgebliche Vorteile in der einfachen Handhandhabung, schnellen Herstellung und geringen Materialeinsatz.

Denkbar ist auch, den für die Restauration benötigten Anteil der feuerfesten Masse des Trägerkörpers TK mit einem Haftvermittler zu benetzen und auf diese haftende Fläche das thermoplastische Dentalpulver trocken aufzubringen. Bevorzugt ist, das thermoplastische Dentalpulver auf Basis von PAEK, d.h. eines Polyaryletherketons, in Form einer als Polymer-Suspension direkt auf die Flächen des Trägerkörpers TK aufzutragen. Das feuerfeste Material des Trägerkörpers TK kann dabei einen Teil der Feuchtigkeit absorbieren, wodurch die Suspension SU an der feuerfesten Masse des Trägerkörpers TK haften bleibt. Dieser Vorgang kann wiederholt werden, um hier benötigte Schichtstärken herzustellen, bzw. Schichten mit unterschiedlichen Füllstoffen/Zusatzstoffen zu kombinieren um somit gewünschte Eigenschaften (Farbe, Steigerung der mechanische Werte, Retentionen, Haftverbunde, usw.) herzustellen. Die Eigenschaften einer möglichen individuellen Funktionalisierung und Steuerung von Eigenschaften mittels unterschiedlichen Schichtaufbaus bietet zahlreiche Vorteil bei der Herstellung der zahnmedizinischen Restauration.

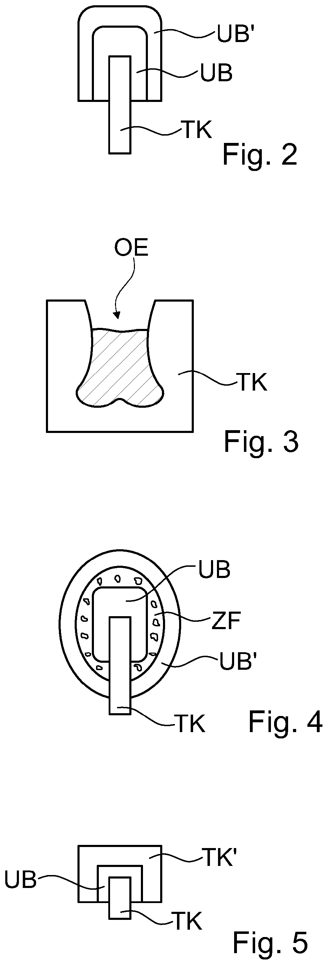

Die im Zusammenhang mit Fig. 1 vorgestellte Verfahrensführung beschreibt die grundsätzliche Wirkungsweise des erfindungsgemäßen Verfahrens. Hierzu sind vielfältige Abwandlungen möglich, die nachfolgend unter Bezugnahme auf die Fig. 2 bis 5 vorgestellt werden. Die in Bezug auf diese Ausführungsformen vorgestellten Erläuterungen betreffen jedoch nur die Unterschiede zu dem Verfahren nach Fig. 1, so dass um unnötige Wiederholungen zu vermeiden, nicht sämtliche Schritte der Prozessführung gezeigt sind.

In Fig. 2 ist wiederum eine Ausführungsform gezeigt, bei dem der Trägerkörper TK mit einem thermoplastischen Überzug UB versehen ist, wie bereits in Zusammenhang mit Fig. 1 erläutert. Zusätzlich wird nun eine weitere Benetzung des Trägerkörpers TK mit der Suspension SU durchgeführt, so dass sich ein weiterer Überzug UB' auf der Außenfläche des Überzugs UB bildet. Dieser weitere Überzug UB' kann entweder bereits direkt nach dem Vortrocknen durch Benetzen mit der Suspension gebildet werden, so dass nun dieser mehrlagige Aufbau, bestehend aus dem Überzug UB und dem weiteren Überzug UB' gemeinsam der Aufschmelzeinrichtung AE zugeführt werden. Demnach wird eine zusammenhängende thermoplastische Schicht auf der Außenfläche des Trägerkörpers TK gebildet. Alternativ kann der weitere Überzug UB' auch erst nach dem Aufschmelzen des Überzugs UB aufgebracht werden. Eine typische Schichtdicke für den Überzug UB bzw. den weiteren Überzug UB' beträgt ca. 10 bis 5.000 µ, wobei diese von der Konsistenz der Suspension SU abhängt. Es versteht sich von selbst, dass das Benetzen mit der Suspension SU auch mehrfach wiederholt werden kann, so dass sich die gewünschte Schichtdicke erreichen läßt.

In Fig. 3 ist eine weitere Ausführungsform gezeigt. Hier ist der Trägerkörper TK nicht als stiftförmiges Element ausgeführt sondern wird als Einbettmasse bereit gestellt, die eine Öffnung OE aufweist, in die das thermoplastische Material durch Einfüllen der Suspension SU eingebracht wird. Demnach wird ein thermoplastischer Überzug UB auf einer Innenseite des Trägerkörpers TK gebildet, so dass nach Entfernen des Trägerkörpers TK das thermoplastische Material beispielsweise zu einer Krone weiter verarbeitet werden kann.

In Fig. 4 wird eine Ausführungsform gezeigt, bei der zwischen dem Überzug UB und dem weiteren Überzug UB' ein Zusatz oder Füllstoff ZF eingebracht wurde. Der Zusatz oder Füllstoff ZF kann beispielsweise vor dem weiteren Benetzen mit der Suspension SU zur Bildung des weiteren Überzugs UB' auf dem Überzug UB angeordnet werden oder auch der Suspension zugeführt werden. Ebenso ist es denkbar, den Zusatz oder Füllstoff ZF bereits bei der Bildung des Überzugs UB auf dem Trägerkörper TK zuzugeben. Im Rahmen einer benötigten Funktionalisierung von Oberflächen, um hierdurch mechanische Eigenschaften wie z.B. E-Modul, Biegefestigkeiten zu optimieren, oder um das thermoplastische Material als Träger für Füllstoffe (Keramiken, Gläser, Metalle, Metalloxide, Farbpigmente, Fasern) zu verwenden, thermoplastisch auf der zu funktionalisierenden Oberfläche aufzubringen um dadurch Optimierung mechanische oder chemische Haftverbunde/Flächen für eine nachfolgende Weiterverarbeitung zu erzielen.

Unter Bezugnahme auf Fig. 5 ist eine Ausführungsform dargestellt, bei dem der thermoplastische Überzug UB dazu dient, den Trägerkörper TK mit einem weiteren Trägerkörper TK' thermoplastisch zu verbinden. Die beiden Trägerkörper TK und TK' können dabei aus gleichen aber auch aus unterschiedlichen Werkstoffen bestehen. Demnach dient nach dem Aufschmelzen der thermoplastische Überzug als eine Art Lot zwischen den beiden Trägerkörpern TK und TK'. Zusätzlich kann auch der weitere Trägerkörper TK' mit einem entsprechenden thermoplastischen Überzug versehen werden, so dass sich zwischen dem Trägerkörper TK und dem weiteren Trägerkörper TK' ein mehrlagiger Aufbau ergibt.

Die maßgeblichen Vorteile der Erfindung beziehen sich auf die einfache Verarbeitung und den äußerst geringen Materialeinsatz. Das Dentalpulver lässt sich zudem multifunktional zur Herstellung dentaler Restaurationen, in der Verbundtechnik und zur mechanischen oder chemischen Funktionalisierung von Oberflächen einsetzen.

Aufgrund des direkten Auftrags auf die dentale Form oder den Träger sind geringere Fertigungstoleranzen im Bereich von 20µm oder weniger möglich. Die Produktionszeiten einer dentalen PAEK Restauration verkürzen sich erheblich, da keine digitalen Scann, Konstruktion und Fertigungsprozesse benötigt werden. Das thermoplastische Dentalpulver ist individualisierbar, sein Verarbeitungszweck ist anpassbar und es deckt verschiedene Indikationen in der Anwendung ab.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Verfahren zur Herstellung zahnmedizinischer Restaurationen mit einem Dentalpulver, umfassend die Schritte:
- Bereitstellen des Dentalpulvers aus einem thermoplastischen Basispolymer in einer wässrigen oder lösemittelhaltigen Suspension;
- Benetzen eines Trägerkörpers mit der Suspension; und
- Vortrocknung der Suspension, zum wenigstens teilweisen Entfernen des Flüssigkeitsanteils der Suspension; und
- Bilden eines thermoplastischen Überzugs aus dem Basispolymer auf dem Trägerkörper durch Aufschmelzen der vorgetrockneten Suspension.

2. Verfahren nach Anspruch 1, bei dem das Basispolymer in Form von Pulver aus einer Polymersynthese oder aus thermoplastisch verarbeiteten Formen bereitgestellt wird.

3. Verfahren nach Anspruch 1 oder 2, bei dem das Basispolymer PAEK umfasst.

4. Verfahren nach einem der vorhergehenden Ansprüche, bei dem die wässrige oder lösemittelhaltige Suspension in Form einer vorzugsweise in Wasser und/oder in einem Lösungsmittel gebildeten Polymer-Suspension oder kolloidalen Lösung bereitgestellt wird.

5. Verfahren nach Anspruch 4, bei dem vor dem Benetzen des Trägerkörpers ein Homogenisieren der Suspension durch Rühren, Ultraschal oder Vibration durchgeführt wird.

6. Verfahren nach einem der vorhergehenden Ansprüche, bei dem der Schritt des wenigstens teilweisen Entfernens des Flüssigkeitsanteils der Suspension dadurch ausgeführt wird, dass ein Trocknungsschritt, vorzugsweise mittels einer Wärmebehandlung und/oder unter reduziertem Umgebungsdruck, durchgeführt wird.

7. Verfahren nach einem der vorhergehenden Ansprüche, bei dem der Schritt des wenigstens teilweisen Entfernens des Flüssigkeitsanteils der Suspension dadurch ausgeführt wird, dass der Trägerkörper flüssigkeitsaufnehmend ausgeführt wird.

8. Verfahren nach einem der vorhergehenden Ansprüche, bei dem der Schritt des Benetzens des Trägerkörpers mit der Suspension wenigstens einmal wiederholt wird.

9. Verfahren nach einem der vorhergehenden Ansprüche, bei durch das Aufschmelzen des aus der Suspension gebildeten Überzugs auf dem Trägerkörper das thermoplastischen Basispolymer zu einer homogenen Polymerschicht umgewandelt wird.

10. Verfahren nach einem der vorhergehenden Ansprüche, bei dem nach dem Verschmelzen des thermoplastischen Materials und einem Abkühlen des thermoplastischen Materials ein Entfernen des Trägerkörpers durchgeführt wird.

11. Verfahren nach einem der vorhergehenden Ansprüche, bei dem nach dem Aufschmelzen des thermoplastischen Materials ein erneutes Benetzen des Trägerkörpers mit der Suspension durchgeführt wird und nachfolgend ein Aufschmelzen des thermoplastischen Materials erfolgt.

12. Verfahren nach einem der vorhergehenden Ansprüche, bei dem der oder die Schritte des Benetzens des Trägerkörpers mit der Suspension unter Zugabe eines oder mehrerer Füllstoffe oder Zusatzstoffe ausgeführt werden.

13. Verfahren nach einem der vorhergehenden Ansprüche, bei dem nach dem Aufschmelzen des thermoplastischen Materials eine Nachbearbeitung der Polymerschicht durchgeführt wird.

14. Verfahren nach einem der vorhergehenden Ansprüche, bei dem ein weiterer Trägerkörper bereitgestellt wird, der mittels des thermoplastischen Überzugs mit dem Trägerkörper verbunden ist.

15. Verfahren nach Anspruch 14, bei dem der weitere Trägerkörper vor dem Verbinden mit dem Trägerkörper mit der Suspension benetzt wird.

16. Verfahren nach einem der vorhergehenden Ansprüche, bei dem der Trägerkörper ein Abutment, ein Stift, eine Kronen, eine Brücke, ein Modellguss oder ein in einer Einbettmasse geformtes Modell ist,
und bei dem der Trägerkörper entfernt wird oder einen Bestandteil der medizinischen Restauration bildet.

17. Verfahren nach einem der vorhergehenden Ansprüche, bei dem Zusatz- oder Füllstoffe zur Bildung retentiver Strukturen, zur Verstärkung, zur Verminderung der bakteriellen Vermehrung, zur chemischen Ankopplung oder zur Bildung eines Haftvermittlers eingesetzt werden.

## Claims

1. Method for producing dental restorations using a dental powder, comprising the steps of:
- providing the dental powder from a thermoplastic base polymer in an aqueous or solvent-containing suspension;
- wetting a support element with the suspension; and
- pre-drying the suspension in order to at least partially remove the liquid proportion of the suspension; and
- forming a thermoplastic coating from the base polymer on the support element by fusing the pre-dried suspension.

2. Method according to claim 1, wherein the base polymer is provided in the form of powder from a polymer synthesis or from thermoplastically processed molds.

3. Method according to either claim 1 or claim 2, wherein the base polymer comprises PAEK.

4. Method according to any of the preceding claims, wherein the aqueous or solvent-containing suspension is provided in the form of a polymer suspension or colloidal solution preferably formed in water and/or in a solvent.

5. Method according to claim 4, wherein before the support element is wetted, the suspension is homogenized by stirring, ultrasound or vibration.

6. Method according to any of the preceding claims, wherein the step of at least partially removing the liquid proportion of the suspension is carried out by performing a drying step, preferably by means of heat treatment and/or under reduced ambient pressure.

7. Method according to any of the preceding claims, wherein the step of at least partially removing the liquid proportion of the suspension is carried out by the support element being designed so as to absorb liquid.

8. Method according to any of the preceding claims, wherein the step of wetting the support element with the suspension is repeated at least once.

9. Method according to any of the preceding claims, wherein as a result of the coating formed from the suspension on the support element being fused, the thermoplastic base polymer is converted into a homogeneous polymer layer.

10. Method according to any of the preceding claims, wherein after the thermoplastic material is fused and the thermoplastic material is cooled, the support element is removed.

11. Method according to any of the preceding claims, wherein after the thermoplastic material is fused, the support element is re-wetted with the suspension and subsequently the thermoplastic material is fused.

12. Method according to any of the preceding claims, wherein the step(s) of wetting the support element with the suspension are carried out while adding one or more fillers or additives.

13. Method according to any of the preceding claims, wherein after the thermoplastic material is fused, the polymer layer is reworked.

14. Method according to any of the preceding claims, wherein a further support element is provided which is connected to the support element by means of the thermoplastic coating.

15. Method according to claim 14, wherein the further support element is wetted with the suspension before being connected to the support element.

16. Method according to any of the preceding claims, wherein the support element is an abutment, a pin, a crown, a bridge, a model casting or a model formed in an embedding mass, and wherein the support element is removed or forms a component of the medical restoration.

17. Method according to any of the preceding claims, wherein additives or fillers are used for forming retentive structures, for reinforcement, for reducing bacterial propagation, for chemical coupling or for forming an adhesion promoter.

## Revendications

1. Procédé de fabrication de restaurations dentaires avec une poudre dentaire, comprenant les étapes :
- de fourniture de la poudre dentaire à partir d'un polymère de base thermoplastique dans une suspension aqueuse ou contenant un solvant ;
- de mouillage d'un corps porteur avec la suspension ;
- de préséchage de la suspension pour éliminer au moins partiellement la partie liquide de la suspension ; et
- de formation d'un revêtement thermoplastique à partir du polymère de base sur le corps porteur en faisant fondre la suspension préséchée.

2. Procédé selon la revendication 1, dans lequel le polymère de base est fourni sous la forme d'une poudre provenant d'une synthèse de polymère ou de formes traitées de manière thermoplastique.

3. Procédé selon la revendication 1 ou 2, dans lequel le polymère de base comprend du PAEK.

4. Procédé selon l'une des revendications précédentes, dans lequel la suspension aqueuse ou contenant un solvant est fournie sous la forme d'une suspension de polymère ou d'une solution colloïdale formée de préférence dans de l'eau et/ou dans un solvant.

5. Procédé selon la revendication 4, dans lequel, avant le mouillage du corps porteur, une homogénéisation de la suspension par agitation, ultrason ou vibration est effectuée.

6. Procédé selon l'une des revendications précédentes, dans lequel l'étape d'élimination au moins partielle de la partie liquide de la suspension est réalisée par l'exécution d'une étape de séchage, de préférence au moyen d'un traitement thermique et/ou sous pression ambiante réduite.

7. Procédé selon l'une des revendications précédentes, dans lequel l'étape d'élimination au moins partielle de la partie liquide de la suspension est réalisée par la réalisation du corps porteur comme récepteur de liquide.

8. Procédé selon l'une des revendications précédentes, dans lequel l'étape du mouillage du corps porteur avec la suspension est répétée au moins une fois.

9. Procédé selon l'une des revendications précédentes, dans lequel, par la fusion du revêtement formé à partir de la suspension sur le corps porteur, le polymère de base thermoplastique est transformé en une couche de polymère homogène.

10. Procédé selon l'une des revendications précédentes, dans lequel, après la fusion du matériau thermoplastique et un refroidissement du matériau thermoplastique, un retrait du corps porteur est effectué.

11. Procédé selon l'une des revendications précédentes, dans lequel, après la fusion du matériau thermoplastique, un nouveau mouillage du corps porteur est effectué avec la suspension, suivi par une fusion du matériau thermoplastique.

12. Procédé selon l'une des revendications précédentes, dans lequel l'étape ou les étapes du mouillage du corps porteur avec la suspension sont réalisées en ajoutant un ou plusieurs agents de remplissage ou additifs.

13. Procédé selon l'une des revendications précédentes, dans lequel, après la fusion du matériau thermoplastique, un post-traitement de la couche de polymère est effectué.

14. Procédé selon l'une des revendications précédentes, dans lequel un corps porteur supplémentaire est fourni, lequel est relié au corps porteur au moyen du revêtement thermoplastique.

15. Procédé selon la revendication 14, dans lequel le corps porteur supplémentaire est mouillé avec la suspension avant la liaison au corps porteur.

16. Procédé selon l'une des revendications précédentes, dans lequel le corps porteur est une butée, une broche, une couronne, un pont, un moulage sur modèle ou un modèle formé dans une masse d'enrobage, et dans lequel le corps porteur est retiré ou forme un composant de la restauration médicale.

17. Procédé selon l'une des revendications précédentes, dans lequel des agents additifs ou de remplissage sont utilisés pour la formation de structures de rétention, pour le renforcement, pour la réduction de la prolifération bactérienne, pour le couplage chimique ou pour la formation d'un agent d'adhérence.
